# EUROPEAN PATENT SPECIFICATION

(11) **EP 2 543 640 B1**
(45) Date of publication and mention of the grant of the patent: **18.09.2019**
(21) Application number: 11750184.1
(22) Date of filing: 04.03.2011
(51) Int. Cl.: C02F 1/00, B65D 45/30, C02F 1/48, F16K 11/00, B01D 35/30, B01D 24/10, B01D 29/11, B01D 29/92

(54) **SEALING STRUCTURE**
DICHTUNGSSTRUKTUR
STRUCTURE D'ÉTANCHÉITÉ

(30) Priority: 05.03.2010 CN 201010129273
(43) Date of publication of application: 09.01.2013
(60) Divisional application: 14154367.8
(73) Proprietor: Chau, Yiuchau, Hong Kong (CN)
(72) Inventor: Chau, Yiuchau, Hong Kong (CN)
(74) Representative: J A Kemp
(86) International application number: PCT/CN2011/071518
(87) International publication number: WO 2011/107031

(56) References cited:
- CA-A1- 2 265 235
- CN-Y- 2 145 293
- CN-Y- 2 266 448
- CN-Y- 2 732 721
- CN-Y- 201 077 789
- GB-A- 1 450 038
- US-A- 1 825 774
- US-A- 3 491 908
- US-A- 4 617 117
- US-A- 4 988 437

## Description

The present invention relates to a sealing structure, and particularly to a sealing structure employed by a fluid treatment device.

A fluid treatment device generally uses one or several fluid treatment mediums to treat various fluids, such as water and so on, and generally contains one or more fluid treatment units accommodating the fluid treatment mediums. When fluid passes through a fluid treatment medium, the impurities and pollutant contained therein are removed by physical-chemical reaction with the treatment mediums. A typical example of such fluid treatment device is a device for purifying and softening water. By this device, on one hand, chemical pollutants, such as chlorine, heavy metals and sulfides in water, particle pollutants and the like are removed; and on the other hand, the water is softened due to removing calcium and magnesium in water. Such water treatment device may provide purified water suitable for direct drinking and washing water for families. Currently, it has been an important appliance for family life, especially for Chinese families.

Such device is disclosed in the prior art. For instance, US patent No. 5, 415, 770 discloses that a fine grinding copper-zinc alloy is used to remove chemical pollutant (e.g., chlorine) during the pretreatment of water before being subjected to a water-softening ion exchange medium, whereby a lifetime of the ion exchange medium is prolonged. Alternatively, the finely divided copper-zinc alloy may also be used to perform a post treatment to the water.

Publication document No. CN1250748A of Chinese patent application for invention also discloses a device used for treating water which may work under any of operational modes, such as normal use, backwash, flush, closed, and bypass. As shown in FIGS. 1 and 4 of this document, the device comprises a cylindrical housing 12 and a disc-shaped valve plate 38 which is mounted to a lower portion of the housing and can be rotated with the housing. The valve plate contains several passages for being selectively connected with passages of a valve compartment under different operational modes. The valve plate 38 is driven to rotate by rotation of the housing 12, so that it may be switched to different operational modes.

In the device with such configuration, as the valve plate and the valve compartment occupy some height of the treating device, thereby increasing the height of the treating device. The valve plate has a larger section (close to that of the housing) and is in close contact with a sealing member in the valve compartment, and thus a force required for rotating the valve plate is relatively larger, thereby being inconvenient in operation. In addition, in the case of often rotating the valve plate with a large angle, the friction between the valve plate and the sealing member easily leads to degradation of sealing therebetween, thereby shortening a service life of the device.

Furthermore, the existing treatment device generally includes a base with a sealing member, and the base and the sealing member are mounted to a lower end of the cylindrical housing of the device by rotation. During the mounting process, the sealing member is rotated with the base, thereby generating a very large frictional resistance, which on one hand, causes difficulties in operation, and on the other hand, makes the sealing member be vulnerable to injuries so as to destroy the sealing effect.

Additionally, as the demand for fluid treatment is enhanced, treatment paths of a treatment unit in the prior art fail to provide support for the demand, so the treatment unit itself also needs to be improved.

US 4,617,117 discloses a housing assembly with a removable jacked cover. The housing assembly for pressurized fluids having a cover removably attached to the housing in a manner that allows jacking of the cover into and away from sealing engagement with the housing, comprisies, in combination, a housing; a fluid chamber in the housing; a fluid inlet and a fluid outlet in the housing in fluid flow connection with the fluid chamber; and a removable cover assembly closing off an open end of the fluid chamber and comprising a cover movable into and out from sealing engagement with the housing; a jack ring removably attached to the housing and having a central aperture; and optionally, when the vessel is pressurized, also having a peripheral portion to the housing engaging a peripheral portion of the removable cover; and means attaching the movable cover axially to the jack ring at the central aperture in a manner such that the jack ring engages the cover at a central portion adjacent the central aperture of the jack ring, and optionally also at a peripheral portion adjacent the peripheral portion of the jack ring, and jacks the cover onto the housing into sealing engagement therewith by such engagement when the jack ring is being attached to the housing, and off from the housing out from sealing engagement therewith, by engagement through the attaching means at a central portion of the jack ring adjacent the central aperture thereof when the jack ring is being removed from the housing, and optionally also at a peripheral portion with the peripheral portion of the jack ring, so that the removable cover is jacked onto the housing and off from the housing by the jack ring, for access to the fluid chamber within the housing.

An aim of the present invention is to avoid and eliminate shortcomings in the above prior art. According to the present invention there is provided a sealing structure as defined in the independent claim.

There is disclosed a manual switching mechanism for a fluid treatment device, the fluid treatment device comprising an inlet for receiving a fluid and a treatment device main body for treating the fluid, the fluid treatment device further comprising an intake passage for fluid to be treated for supplying the fluid to the treatment device main body, a treated fluid discharge passage for discharging a treated fluid, a backwash fluid intake passage for supplying a backwash fluid to the treatment device main body, a backwash fluid discharge passage for discharging the backwash fluid, wherein the manual switching mechanism comprises a valve core which is able to be manually operated, wherein the valve core is provided on a side of the treatment device main body, and is able to be manually operated so as to be located at two or more different positions which comprise a treatment position and a backwash position; the valve core is connected to the inlet and the intake passage for fluid to be treated and blocks the backwash fluid discharge passage when the valve core is located at the treatment position; and the valve core is connected to the inlet and the backwash fluid intake passage, so that the backwash fluid discharge passage is communicated with an outside of the fluid treatment device, when the valve core is located at the backwash position.

A size of the valve core can be smaller by providing the valve core on a side (instead of a bottom) of the treatment device main body, so that switches between operational modes of the treatment device can be achieved by operating the valve core to rotate a smaller distance, which is conducive to avoiding surface abrasion between the valve core and valve compartment so as to ensure the sealing effect. On the other hand, the reduction of the size of the valve core is conducive to decreasing the operating force, and the valve core being provided at a side is conducive to operation by a user through a knob. In addition, the arrangement of a valve core at a side is conducive to reduction of a height of the treatment device.

Preferably, the valve core is substantially in a cylindrical shape, and has a straight hole running through the valve core along a radial direction of the cylinder, the straight hole being used to connect the inlet and the intake passage for fluid to be treated; and the valve core further comprises a first hole leading to one end face from a cylindrical surface of the valve core, and a second hole leading to another end face from the cylindrical surface of the valve core, wherein the first hole is used to connect the inlet and the backwash fluid intake passage, and the second hole is used to allow the backwash fluid discharge passage to be communicated with the outside of the fluid treatment device.

The first and second holes may be arranged opposite to each other in a radial direction of the valve core.

Preferably, the manual switching mechanism further comprises a valve rod, one end of which is connected with the valve core in an anti-twisting manner so that a rotation of the valve rod around its own axis is able to drive a rotation of the valve core, and the other end of the valve rod is connected with an operation knob in an anti-twisting manner, the operation knob being able to be manually operable by an operator from the outside of the fluid treatment device. The valve rod may be provided within the backwash fluid intake passage, the operation knob being connected with the operation knob in an anti-twisting manner through a sealing member which is hermetically mounted in the backwash fluid intake passage and is rotatable in the backwash fluid intake passage. More preferably, the other end of the valve rod is connected with a sliding sealing member which opens the treated fluid discharge passage when the valve core is located at the treatment position, and blocks the treated fluid discharge passage when the valve core is located at the backwash position.

The present invention provides a sealing structure preferably used for a fluid treatment device, and the sealing structure comprises a cylinder with an opening formed at one end thereof, the cylinder comprising an inner wall surface and an outer wall surface, and an outer thread being provided on the outer wall surface; a sealing cover which is capable of hermetically cooperating with the inner wall surface of the cylinder so as to seal the opening of said cylinder; a support cover which is capable of being connected with the cylinder by thread engagement with said outer thread of said cylinder; when the support cover and the cylinder are relatively rotated in order to achieve a threaded connection of the support cover and the cylinder, the support cover is capable of supporting the sealing cover and impelling it to move in parallel along the inner wall of the cylinder so as to allow the sealing cover to reach a position at which it seals the opening, the support cover has a support surface facing the opening, the sealing cover has a supported surface facing away from the opening, wherein the frictional coefficient between the support surface and supported surface is so low that the sealing cover is not rotated relative to the cylinder, but is merely moved in parallel relative to the cylinder when the support cover is rotated relative to the cylinder and the support surface supports and impels the supported surface, wherein the support cover and the sealing cover comprise a connection structure to connect them together, by which the support cover drives the sealing cover to move in parallel relative to the cylinder so as to leave the opening when the support cover is detached by rotation from the cylinder, wherein the connection structure comprises: a through hole provided at a center of the support cover; and an engagement member with a rod portion running through the through hole, one end of the rod portion being connected with the sealing cover, and the other end thereof being connected with a head; wherein a size of the head is greater than that of the through hole so that the support cover is clamped between the head and the sealing cover, thereby preventing disengagement of the support cover from the sealing cover, wherein the supported surface consists of a flat portion and a cylindrical projection projecting axially from the supported surface of the sealing cover, said cylindrical projection being provided at a center of the sealing cover, and comprising an engagement hole, with which the one end of the rod portion is engaged so as to connect the one end of the rod portion with the sealing cover, wherein the support surface consists of a flat portion, of the through hole and along the axis of said through hole of a cylindrical recess for accommodating said cylindrical projection of said supported surface, said cylindrical recess having a larger diameter than said through hole, wherein the support surface supports the sealing cover by matingly engaging its flat portion with the flat portion of the supported surface, wherein a clearance cooperation is formed between the rod portion of the engagement member and the through hole of the support cover and between the cylindrical projection and the cylindrical recess so as to reduce frictional resistance, wherein the engagement member closely engages with the sealing cover, so that there is no relative rotation between the engagement member and the sealing cover during a process of detaching the support cover by rotation from the cylinder, and during the process of detaching the support cover by rotation from the cylinder, the engagement member does not rotate, and the support cover drives the engagement member to move in parallel relative to the cylinder and further drives the sealing cover to move in parallel relative to the cylinder, wherein a periphery of the sealing cover is provided with a sealing ringwhich hermetically abuts against the inner wall surface of the cylinder when the opening is sealed by the sealing cover.

When assembling the sealing structure, the sealing cover serving as the sealing member merely moves in parallel under impelling of the support cover, and no rotation occurs. Accordingly, it is merely required to overcome friction necessary for parallel motion. The sealing structure designed as such, on one hand, facilitates operation, and on the other hand, can avoid abrasion of the sealing member.

The support cover has a support surface facing the opening, the sealing cover has a surface to be supported facing away from the opening, a frictional coefficient between the support surface and the surface to be supported is so low that the sealing cover is not rotated relative to the cylinder, but is merely moved in parallel relative to the cylinder when the support cover is rotated relative to the cylinder and the support surface supports and impels the surface to be supported. Or, roll balls or rollers are provided between the support cover and the sealing cover to reduce friction.

Moreover, the support cover and the sealing cover preferably comprise a connection structure to connect them together, by which the support cover drives the sealing cover to move in parallel so as to leave the opening when the support cover is detached by rotation from the cylinder. The connection structure may be designed in such a way that it comprises a through hole provided at a center of the support cover; an engagement member with a rod portion running through the through hole, one end of the rod portion being connected with the sealing cover, and the other end thereof being connected with a head; wherein a size of the head is greater than that of the through hole so as to prevent disengagement of the support cover from the sealing cover.

There are disclosed two improved fluid treatment units. One fluid treatment unit comprises a chamber accommodating a treatment medium, the chamber having an inlet for introducing a fluid and an outlet for discharging the fluid, wherein in walls forming the chamber, a plurality of guide plates extend from one of a first wall and a second wall opposite to each other to the other, the guide plates of the first wall and the guide plates of the second wall are arranged at intervals so that the fluid entering into the chamber from the inlet crookedly flows to the outlet under the guide of the guide plates.

By the above configuration, the fluid treatment unit of the present invention lengthens the fluid treatment path without increasing its volume and improves the treatment effect.

In the above fluid treatment unit, the chamber is preferably in a circular shape, and is formed by a cylindrical inner wall, a cylindrical outer wall enclosing the inner wall, a first end wall connecting one end of the inner wall and one end of the outer wall, and a second end wall connecting the other end of the inner wall and the other end of the outer wall. The first end wall is the first wall, and the second end wall is the second wall. Of course, it is possible that the inner wall acts as the first wall, and the outer wall acts as the second wall. Preferably, the guide plates of the first and second walls substantially extend within a plane comprising an axis of the cylindrical inner wall.

In addition, it is preferably provided with a partition board to partition the circular chamber, the circular chamber having two ends at both sides of the partition board, wherein the inlet and the outlet are provided at the two ends, respectively, so that the fluid flows through an entire circumference of the circular chamber. Or, the inlet and the outlet are provided at radially-symmetric positions of the circular chamber, so that the fluid flows through half circumference of the chamber.

The other disclosed fluid treatment unit comprises a chamber accommodating a fluid treatment medium, the chamber being defined by a cylindrical outer cylinder, two ends thereof respectively forming an inlet and an outlet of the chamber, wherein a guide plate is formed within the chamber, an extension direction of the guide plate being not parallel to an axis of the cylindrical outer cylinder, so that the fluid is guided to flow along a direction oblique relative to the axis.

The fluid treatment device, as compared with the case of no guide plate being provided, is capable of guiding the water flow to flow along an inclined direction by means of the guide plates, thereby increasing the treatment path and improving the treatment effect.

Preferably, the fluid treatment unit further comprises a cylindrical inner cylinder provided inside of the outer cylinder and coaxial therewith, thereby forming an annular space between the inner cylinder and the outer cylinder, wherein the guide plate is located within the annular space; or, the fluid treatment unit further comprises at least one disc provided within the outer cylinder and coaxial therewith, and an annular space is formed between a cylindrical surface where a peripheral surface of the disc is located and the outer cylinder, wherein at least a portion of the guide plate is located within the annular space.

Preferred embodiments of the present invention will be described as below with reference to accompanying drawings, wherein
FIG. 1 is a schematic sectional view of the fluid treatment device according to a first embodiment of the present invention;
FIG. 2 is a schematic sectional view of the fluid treatment device according to a second embodiment of the present invention under a normal treatment state;
FIG. 3 is a schematic sectional view of the fluid treatment device according to a second embodiment of the present invention under a backwash state;
FIGS. 4(a) to 4(b) are schematic views of a manual switching mechanism of the fluid treatment device of the present invention;
FIGS. 5(a) to 5(c) are schematic views of a sealing structure of the fluid treatment device of the present invention;
FIGS. 6(a) to 6(c) are schematic views of a fluid treatment unit of the fluid treatment device of the present invention;
FIGS. 7(a) to 7(c) are schematic views of another fluid treatment unit (partial) of the fluid treatment device of the present invention;
FIGS. 8(a) to 8(c) are schematic views of the another fluid treatment unit (partial) of the fluid treatment device according to a modified embodiment of the present invention.

Referring to above explanations, it can be known that the fluid treatment device and respective treatment units and mechanisms including the same can be used for, but not exclusively, water treatment. It is used for water treatment in its optimized use. For the convenience of expression, a water treatment device, a water treatment unit, a water treatment medium and the like are taken as examples hereinafter to introduce the present invention. It should be appreciated that the water herein may be any fluid.

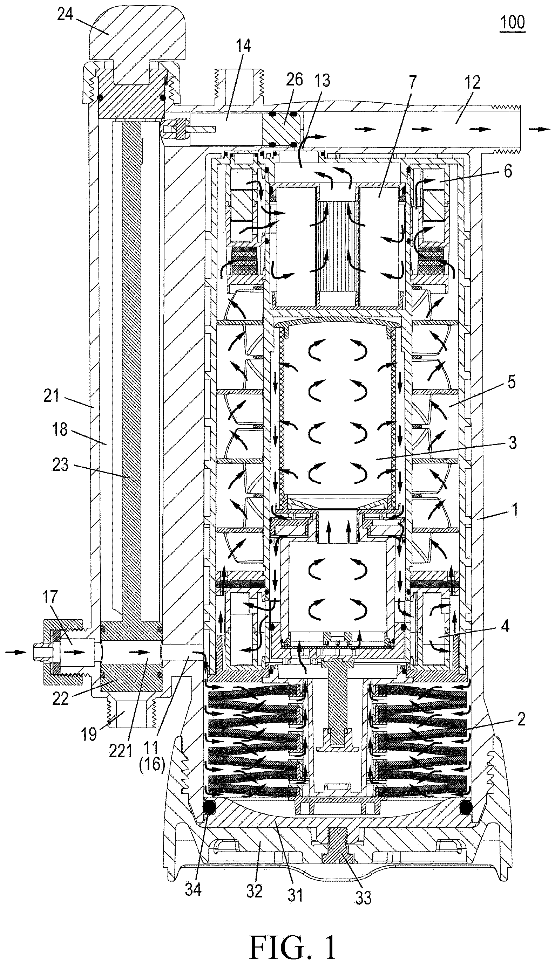

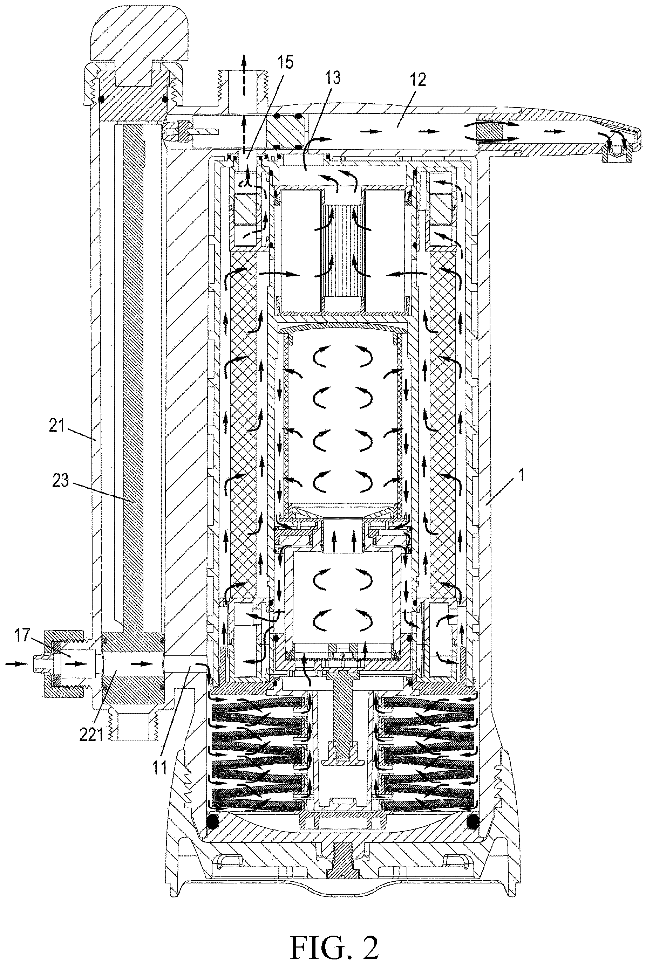

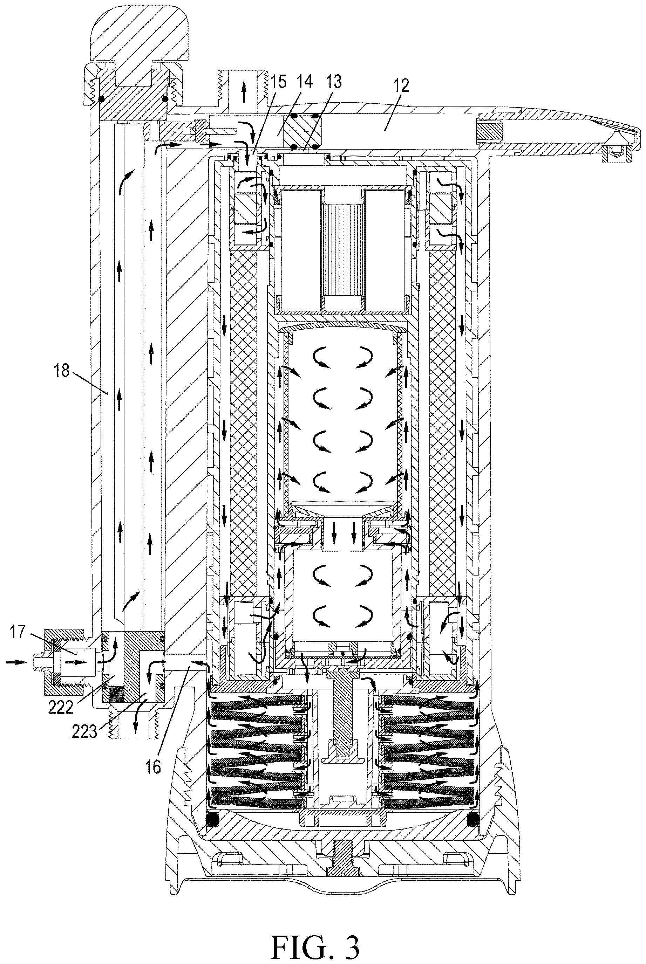

FIG. 1 is a schematic sectional view of the water treatment device according to a first embodiment of the present invention, and the device is in a normal treatment state of treating water to be treated. In preferable applications, the treatment device 100 may be an apparatus connected with a tap for treating city or other drinking water sources. Such water treatment device at least can work under a normal treatment state of treating the water to be treated, and a backwash state of backwashing a water treatment medium in the device (the second embodiment as illustrated in FIGS. 2 and 3 shows the water treatment device working under a normal treatment state and a backwash state, respectively).

In the first embodiment, the water treatment device comprises a main housing 1, which is preferably cylindrical. In this disclosure, the main housing 1 and respective members (e.g., a filter, respective treatment units, etc) therein for treating the water put together are called as a treatment device main body. An opening below the cylindrical main housing 1 are sealed with a sealing structure that will be described in detail below. A water intake passage 11 for introduction of the water to be treated is arranged at a lower portion of the main housing and above the sealing structure, a water discharge passage 12 for discharging treated water is arranged at an upper portion of the main housing, a treatment unit in the main housing is communicated with the water discharge passage 12 through a water outlet 13. In addition, the upper portion of the main housing 1 (and an
upper portion of an additional housing 21 described below) is further provided with a horizontal backwash water intake passage 14 for introduction of backwash water. The horizontal backwash water intake passage 14 is communicated with respective treatment units through a backwash water inlet 15. A backwash water discharge passage 16 for discharging the backwash water is provided below the main housing 1. In this embodiment, the backwash water discharge passage preferably shares a common passage with the water intake passage.

According to this embodiment, a plurality of treatment units and a filter 2 assembled together are provided inside of the main housing. Of course, the main housing 1 may be provided with no filter therein, and it may also be provided with only one treatment unit, which can be determined by a person skilled in the art upon actual use conditions. A treatment medium is accommodated within chambers of each treatment unit. Generally, the treatment medium will not fill up a whole chamber. This on one hand provides a sufficient space for movement of the treatment medium, and on the other hand can avoid a pressure drop before and after the water passing though the treatment unit being too large. However, if necessary, the treatment medium may fill up the whole chamber. As shown in FIG. 1, the filter 2, a first treatment unit 3, a second treatment unit 4, a third treatment unit 5, a fourth treatment unit 6 and a fifth treatment unit 7 are provided inside of the main housing 1 along a flow direction of the water to be treated. As for the filter 2 and the first, fourth and fifth treatment units, any suitable treatment unit may be used therefor, and thus, no detailed introduction is made herein; while the second and third treatment units are notably improved relative to the prior art, and will be introduced in detail below.

An additional housing 21 is provided at a side of the main housing 1, for example, a left side as shown in FIG. 1. The additional housing 21 is also preferably cylindrical, and the axis thereof is parallel to that of the main housing 1. The additional housing 21 is used for mounting at least a portion of a manual switching mechanism, which is at least switchable between a normal treatment state and a backwash state. A more detailed introduction will be made below for this manual switching mechanism. The additional housing 21 and the main housing 1 may be connected together by using various manners. Preferably, they are integrally formed, as shown in FIG. 1.

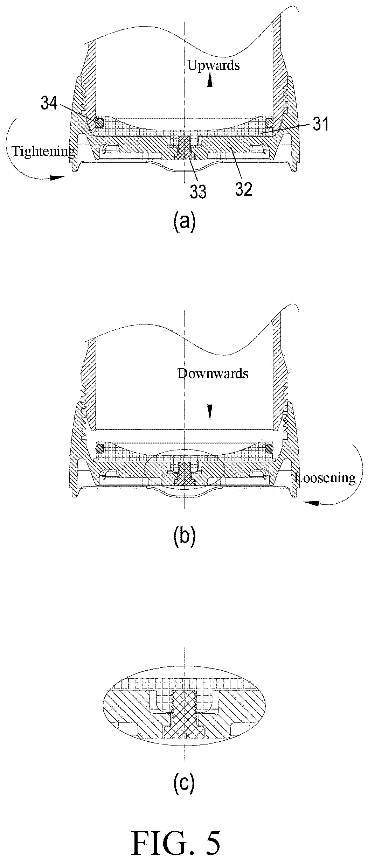

The sealing structure of the present invention is demonstrated in detail as follows with reference to FIGS. 1 and 5. FIG. 5(a) shows a schematic sectional view of the sealing structure when it is tightened. FIG. 5(b) shows a schematic sectional view of the sealing structure when it is loosened. FIG. 5(c) is a partial enlarged view of FIG. 5(b). As shown in FIG. 5(a), the sealing structure of the present invention is located at a lower portion of a cylinder forming the main housing 1 so as to seal the opening at a lower end of the cylinder and provide a base for the main housing 1. The sealing structure mainly includes an inner wall surface of the cylinder and a sealing cover 31 installed within the cylinder which are hermetically cooperated with one another. A periphery of the sealing cover is preferably provided with a sealing ring 34 capable of strengthening the sealing effect and the sealing ring 34 is able to hermetically abut against the inner wall surface of the cylinder. Furthermore, in order to smoothly assemble and disassemble the sealing cover 31, a support cover 32 is specifically provided to drive the sealing cover. Specifically, the support cover has an inner thread which cooperates with an outer thread on an outer wall surface of the cylinder, so that the support cover 32 may be mounted on or detached from the main housing 1 through relative rotation. A support surface is formed at a side of the support cover 32 facing the opening below the cylinder, and a surface to be supported is formed at a side of the sealing cover 31 facing away from the opening. In assembling, after attaching the support surface to the surface to be supported, the support cover 32 is rotated under a state that the inner thread of the support cover 32 is engaged with the outer thread of the cylinder. During the rotation process, the sealing ring 34 starts to contact with the inner wall of the cylinder, thereby generating friction that inhibits rotation of the sealing cover 31. In the present invention, a frictional coefficient between the support surface and the surface to be supported is set to be so low that the sealing cover is no more rotatable when the sealing cover 31 is just in contact with the inner wall of the cylinder and is subjected to the friction. At this time, the support cover is lifted as shown in the drawing due to continuous rotation, while the sealing cover 31 is moved upwards in parallel along the inner wall of the cylinder until reaches a suitable sealing position. Completely different from the sealing cover moveable by rotation in the prior art, such configuration in the present invention causes the sealing cover 31 to be merely moved in parallel without being rotated. Thus, it is merely required to overcome the friction necessary for the movement in parallel, and thus an operator only needs to use smaller strength, and the sealing structure can be assembled in position.

The connection mode of the support cover and the cylinder has been demonstrated above by taking the support cover having the inner thread and the cylinder having the outer thread as an example. However, the present invention is not restricted to this. A person skilled in the art easily conceives that it is also possible to set the outer thread on the support cover and to set the inner thread on the cylinder to realize a connection therebetween by cooperation between the outer thread of the support cover and the inner thread of the cylinder.

In order to convert the rotation movement of the support cover 32 to a straight-line movement of the sealing cover 31, the support surface and the surface to be supported in this embodiment are moved relative to each other in a contact friction manner. However, the present invention is not restricted to this. For example, roll balls or rollers may be provided between the support surface and the surface to be supported so as to form a thrust bearing configuration, whereby the friction between the two surfaces may be smaller.

In order to detach the sealing cover 31 from the main housing 1, a connection structure is further provided in this embodiment. By means of the connection structure, the support cover can drive the sealing cover 31 to escape from the sealing position and to leave the opening of the cylinder during the process of the support cover being unscrewed from the main housing 1. A plurality of implementation means can be used to realize the structure. In a preferred implementation means, as shown in FIG. 5, the connection structure comprises a through hole provided at a center of the support cover, an engagement hole provided at a center of the sealing cover 31 and a screw 33 as an engagement member. The screw has a rod portion and a head, a size of the head is larger than that of the through hole, and a distal end of the rod portion away from the head has a thread. In assembling, a rod portion runs through the through hole from a side of the support cover facing away from the support surface, and an end of the rod portion is engaged with the engagement hole of the sealing cover 31 through threads. As the size of the head is larger than that of the through hole, the support cover 32 is clamped between the head and the sealing cover 31 and is impossible to be disengaged from the sealing cover 31. As such, during a process of unscrewing the support cover 32 from the main housing 1, the screw 33 does not rotate, and the support cover 32 drives the screw 33 to move in parallel and further drives the sealing cover 31 to move in parallel, and finally the sealing cover 31 is disengaged from the main housing 1. In order to allow the screw 33 to closely engage with the sealing cover 31, a hot melt process can be performed or an adhesive can be applied after a thread engagement of the screw 33 and the sealing cover 31, thereby avoiding relative rotation between the screw 33 and the sealing cover 31. In addition, it is preferable that a clearance cooperation is formed between the rod portion of the screw 33 and the through hole so as to reduce the frictional resistance.

The above connection structure is merely demonstrated as an example. A person skilled in the art may also conceive of other configurations according to the teaching of the present invention. For instance, a rod member with a head may serve as an engagement member. The engagement member has no thread, and a thread hole may also not be provided at the center of the sealing cover, but merely one end of the engagement member opposite to the head is connected to a center of the sealing cover. Any existing suitable connection modes may be used, for example, undetachable connection modes like connection by melting, connection by welding, etc, or detachable connection modes like clamp connection, pin connection, etc. Similarly, the rod portion and the head of the engagement member may also be connected by using a plurality of connection modes, for example, detachable connection modes, such as thread engagement, pin connection, clamp connection, etc, and undetachable connection modes, such as integrated molding, connection by welding, connection by bonding, etc. Furthermore, the rod portion is also not necessary to be a circular rod, but may have sections in other forms.

Since the sealing cover 31 is merely moved without being rotated in assembling and disassembling, it may be in any shape. Correspondingly, the inner wall surface of the main housing may also use faces other than the cylindrical face, such as, elliptic cylinder face, various prismatic faces, etc. However, for the outer wall surface of the main housing, a cylindrical shape should be used at least at a portion thereof joining with the support cover so as to facilitate formation of the outer thread, while a cylindrical shape is not necessarily required for other portions thereof.

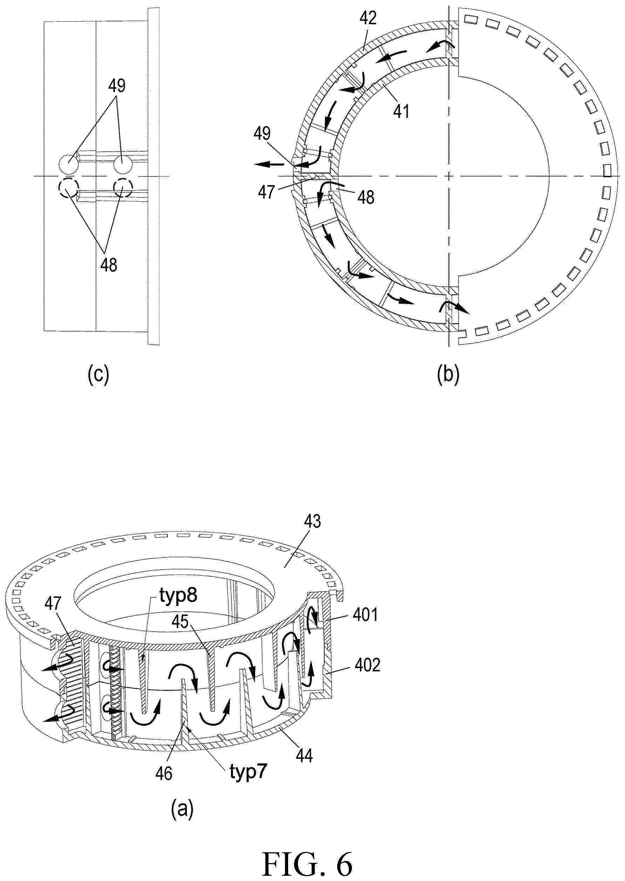

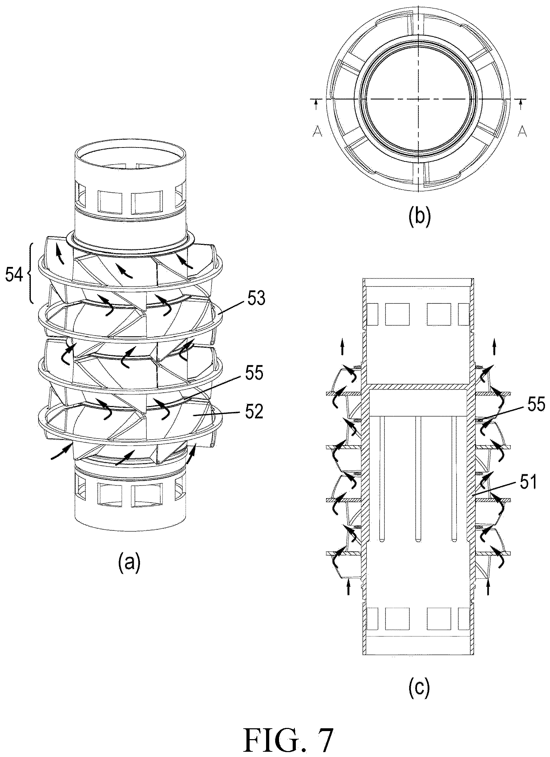

The second and third treatment units in the first embodiment of the present invention will be introduced below in detail. Referring to FIGS. 6 and 7, FIG. 6 schematically illustrates a detailed structure of the second treatment unit 4, wherein FIG. 6(a) illustrates a perspective view of the second treatment unit 4 which is partially cut away, FIG. 6(b) illustrates a top view of the treatment unit, and FIG. 6 (c) illustrates a side view of the treatment unit. FIG. 7 schematically illustrates a detailed structure of the third treatment unit 5, wherein FIG. 7(a) illustrates a perspective view of the third treatment unit 5, FIG. 7(b) illustrates a top view of the third treatment unit, and FIG. 7(c) illustrates a side view of the third treatment unit.

The configuration of the treatment unit shown in FIG. 6 is based on such an inventive concept, i.e., lengthening a flow path of water in the treatment unit so that the water can be sufficiently treated by the treatment medium in the treatment unit. The second treatment unit 4 of this embodiment is preferably annularly configured. As shown in the drawing, the treatment unit comprises a cylindrical inner wall 41, a cylindrical outer wall 42 enclosing the inner wall and provided coaxial therewith, a first end wall 43 connecting one end (an upper end in the drawing) of the inner wall and one end (an upper end in the drawing) of the outer wall, and a second end wall 44 connecting the other end (a lower end in the drawing) of the inner wall and the other end (a lower end in the drawing) of the outer wall. The inner wall 41, the outer wall 42, the first end wall 43 and the second end wall 44 form a unit chamber accommodating the water treatment medium therein. Generally, the water treatment medium will not fill up a whole chamber. This on one hand provides a sufficient space for movement of the treatment medium, and on the other hand can avoid a pressure drop before and after the water passing though the treatment unit being too large. However, if necessary, the treatment medium may fill up the whole chamber. An inlet of the unit chamber is arranged in the inner wall 41, and an outlet thereof is arranged in the outer wall 42. In order to lengthen the water flow path, an upper wall guide plate 45 protruding toward the lower wall is formed on the upper wall 43, and a lower wall guide plate 46 protruding toward the upper wall is formed on the lower wall 44. Obviously, a gap is necessary to be existed between the upper wall guide plate 45 and the lower wall 44; otherwise, the water flow path is cut off. By the same token, a gap is necessary to be existed between the lower wall guide plate 46 and the upper wall 43. Although an axis line of the circular annularity preferably passes through the plane at which each guide plate is located, but it is not exactly this case. A certain degree of deviation does not influence the treatment effect.

As shown in the drawing, the treatment unit is preferably used under a laying flat state (i.e., a central axis of the cylindrical inner wall is along an up-down direction), and, the upper wall guide plate 45 and the lower wall guide plate 46 substantially extend along the up-down direction, and they are alternately arranged so that the water flow extends along a broken line within the unit chamber under the guide of the guide plates. A number of the guide plates could be determined by a person skilled in the art. Generally, when the number of the guide plates is larger, the water flow path is longer and the treatment effect is better; while when the number of the guide plates is small, the water flow path is short and the treatment effect is relatively poor, but a pressure drop when the water flows through the treatment unit is smaller.

As shown in FIGS. 6 (a) and 6(b), the annular unit chamber is provided with a partition board 47 therein to partition the chamber, and two sides of the partition board are two ends of the annular chamber. As shown in FIG. 6 (b), the end of the annular chamber located below the partition board 47 in the drawing is an inlet end, and inlets 48 are two pores arranged in the inner wall; while the end of the annular chamber located above the partition board 47 in the drawing is an outlet end, and outlets 49 are two pores arranged in the outer wall. The water entering into the treatment unit flows through the whole annular chamber after turning several times. Of course, the inlets of the treatment unit can also be arranged in the outer wall, and the outlets thereof can be arranged in the inner wall. In addition, an upper wall and a lower wall may also be selected to set the inlets and the outlets.

In this embodiment, the annular treatment unit is composed of two semi-shells. An upper semi-shell 401 shown in FIG. 6(a) comprises an upper half of the inner wall, an upper half of the outer wall, the upper wall and the upper wall guide plates; and a lower semi-shell body 402 shown in FIG. 6(a) comprises a lower half of the inner wall, a lower half of the outer wall, the lower wall, and the lower wall guide plates. The treatment unit is formed by docking them together.

The above are merely exemplary descriptions of a fluid treatment unit of the present invention. According to the inventive concept of the present invention as described above, in order to achieve the object of lengthening the water flow path, guide plates alternately protruding the other side can be arranged on the inner wall 41 and the outer wall 42 of the annular treatment unit, respectively. In a state that the treatment unit is laid flat (i.e., the central axis of the annularity is along a vertical direction), the water flow crookedly flows up and down. Furthermore, the annular treatment unit is not restricted to be used in a laying flat position, and it can be used to perform water treatment at any position.

The water flow path is also not limited within the whole annularity, but may be half of the annularity, for example, semi-annularity. At this time, in the case where no partition board is provided, the inlet can be arranged at any wall of the annular chamber (it not only can be arranged at the inner wall, the outer wall, but also can be arranged at the upper wall, the lower wall), and meanwhile the outlet can be arranged at a wall radially facing the inlet. In this way, the water flowing into the treatment unit from the inlet is necessary to pass through half circumference and flow out of the treatment unit. Further, two partition boards radially opposite to one another can be arranged so as to divide the annular chamber into two sections, each of which is a semi-circle. An inlet and an outlet are respectively arranged at both ends of each semi-circle (i.e., at a position of both sides of the partition board and close to the partition board), so that the water can flow through a whole semi-circle.

Further, it can be conceived from the above inventive concept that the unit chamber is not restricted in an annular shape but can be in any shape. At this time, the water flow can be caused to crookedly move forward to lengthen the treatment path as long as the guide plates alternately protrude the other side from opposite wall surfaces between the inlet and the outlet of the unit chamber. For example, the chamber may be an elongated cylinder with a rectangular section, two walls where any two opposite sides of the rectangle section are located can be provided with the guide plates; or, the chamber has a shape of elongated cylinder with a circular section, the circle is divided into two opposite semi-circles, two walls where the two semi-circles are located are provided with the guide plates, respectively.

A configuration of the treatment unit as shown in FIG. 7 is based on the same inventive concept as mentioned above, i.e., lengthening a flow path of water in the treatment unit so that the water can be sufficiently treated by the treatment medium in the treatment unit. The treatment unit comprises the annular chamber as shown in FIG. 1 in which a treatment medium is accommodated. The chamber is mainly defined by a cylindrical outer cylinder (not shown in FIG. 7) and a cylindrical inner cylinder 51 provided inside of the outer cylinder and coaxial therewith. An inlet and an outlet are respectively formed at two axial ends of the annular chamber. That is to say, in this embodiment, the water flows along an axial direction of the annular chamber, which is different with the case that the water flows along a circumferential direction of the annular chamber in the embodiment as shown in FIG. 6. As shown in the drawing, in order to lengthen the water flow path, a spiral guide plate 52 is formed within the annular chamber to compel a water flow route to turn around, the spiral guide plate 52 has a substantially horizontal upper edge and a substantially horizontal lower edge, and a helix-shaped inner edge and a helix-shaped outer edge that are positioned at radial inner side and radial outer side of the circle, respectively. The inner edge of the guide plate is preferably in contact with the inner cylinder 51, and the outer edge thereof is preferably in contact with the outer cylinder. Due to the existence of the guide plate, the water entering from the inlet will not directly flow toward the outlet, but flows along a spiral direction under the compelling guide of the guide plate, thereby increasing both the flow route and the time to be treated. For instance, the water turns to flow outwardly when it contacting the inner edge, and turns to flow inwardly when it contacting the outer edge. As a result, an opportunity of the water contacting with the inner and outer cylinders is reduced, and finally, an opportunity of the water contacting with the fine grinding treatment medium is increased and a best filtration effect is achieved.

In order to enable the water entering into the unit to be evenly treated, it is preferable that a plurality of spiral guide plates are used. These spiral guide plates have the same pitch and are distributed at intervals. For example, four same spiral guide plates 52 can be arranged between the inner cylinder 51 and the outer cylinder. These guide plates are preferably at equal intervals. Of course, no matter one spiral guide plate or a plurality of spiral guide plates are used, whether the spiral shapes are the same or different, their spiral angles and heights are easily determinable to a person skilled in the art according to the present invention.

For convenience of manufacture and assembly, it is preferable that a plurality of spiral guide plates 52 are formed into one piece through an annular connection member 53 so as to constitute a guide unit 54. A height or a number of the guide units can be set by a person skilled in the art according to use condition. For example, one, two or more guide units can be arranged within the height of the inner chamber of the whole unit. Although the guide unit preferably occupies the whole chamber, it is not necessarily the case. For example, the guide unit may be merely arranged at a lower portion of the unit. If two or more guide units are arranged in a single unit chamber, spiral directions of these guide units may be the same, but it is also possible to arrange them in a manner of adjacent guide plates having different spiral directions.

As shown in FIG. 7, four guide units 54 are used in a treatment unit of this embodiment, wherein each of the guide units has four guide plates 51, and a height of each of the guide units is about a quarter of the unit inner chamber; and, adjacent guide plates have different spiral directions, lower edges of the upper guide plates and upper edges of the lower guide plates are adjacent to each other up and down on a same plane extending up and down. By means of the treatment unit with such configuration, the water flow flows along a broken line from bottom to top.

In order to avoid staggered overlap of each guide unit 54 in an up and down direction, a separating ring 55 is preferably provided between adjacent guide units. The separating ring 55 is located between the inner cylinder and the outer cylinder of the treatment unit, and its width along a radial direction of the treatment unit is smaller than a radial direction width of the annular chamber of the treatment unit, so that adjacent guide plates along the up and down direction are separated in the case of not blocking the water flow as far as possible.

In addition to increasing the flow route and the treatment time, the guide plates or guide units provided as above also can enhance the self-cleaning effect of fine grinding treatment medium in the unit chamber. This is because medium particles will strike on the guide plates under the action of upward water flow, and the number and intensity of the striking will accordingly increase so that dirt of the particle surfaces can be cleaned off more effectively. In this invention, the guide plate and/or the separating ring is preferably a magnet or is preferably provided with a magnet thereon. As such, particles or fine grinding materials serving as the fluid treatment medium can strike on the separating ring and/or the guide plate under the action of the magnetic field, thereby being able to bring a better cleaning effect.

The guide plate in this invention is not strictly restricted to be in a spiral shape, it may be a flat plate inclined relative to the axis of the cylinder of the unit, or a generally-inclined plate with steps, as long as it can guide the water flow to flow along a direction inclined relative to the axis of the cylinder of the unit. The plurality of guide plates are arranged at an arbitrary distance. Moreover, an inclined angle of the guide plates relative to the axis of the treatment unit also can be determined upon actual conditions, preferably 45 degrees. In addition, it is also easily conceivable for a person skilled in the art that a guide plate integrally formed with the inner cylinder also can be provided and the guide plate protrudes outwards from the inner cylinder; and a guide plate integrally formed with the outer cylinder also can be provided and the guide plate protrudes inwards from the outer cylinder. Preferably, spiral guide plates are provided on both the inner cylinder and the outer cylinder, the inner cylinder and the outer cylinder are assembled together like thread engagement by relative rotation, and these guide plates are separated one another after the inner cylinder and outer cylinder being assembled, so that the effect of the above guide plates also can be achieved.

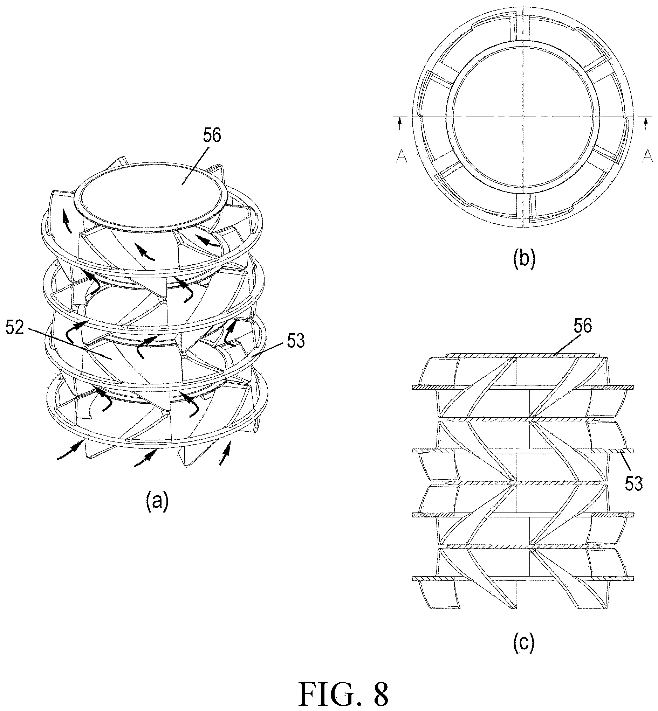

FIG. 8 illustrates a modified embodiment of the treatment unit shown in FIG. 7, wherein FIG. 8(a) shows a perspective view of this treatment unit, FIG. 8(b) shows a top view of this treatment unit, and FIG. 8(c) shows a side sectional view of this treatment unit. For simplicity, the configurations same as those shown in FIG. 7 are not repeated herein. Differences therebetween are mainly introduced below.

The treatment unit shown in FIG. 8 has a cylindrical outer cylinder (not shown in FIG. 8), but does not have an inner cylinder. That is to say, a chamber of the treatment unit shown in FIG. 8 is in a cylindrical shape instead of an annular shape. An inlet and an outlet are respectively formed at two axial ends of the cylindrical chamber. As show in the drawing, the treatment unit comprises four discs 56 provided inside of the outer cylinder, each disc 56 preferably shares the same central axis as the outer cylinder, and the sizes of respective discs are preferably the same. In this way, an annular gap is formed between a cylindrical surface where a peripheral surface of the disc is located and the outer cylinder, and the water flows through the annular gap. A guide unit in this deforming example is the same as that shown in FIG. 7. Herein, the disc 56 plays a role of separating respective guide units, viewed from this aspect, it has the function of the separating ring as mentioned above. In this embodiment, the disc and the guide plate may be individual members, or they may be formed into one piece. In this embodiment, the water flow will turn around when encountering the spiral guide plate and it also will turn around when encountering the disc. Speaking from this perspective, the disc substantially constitutes a guide plate.

The treatment unit with the guide plates is introduced as above. However, the design of this invention is not restricted to this. For example, an inner cylinder also may be provided in a tank body and a guide plate is directly arranged in an annular space between the tank body and the inner cylinder, thereby constituting a fluid treatment device. If the separating ring is not a magnet, the guide plate and the separating ring may be combined into one. At this time, it could be arranged at an arbitrary distance. In this fluid treatment device, the tank body corresponds to the outer cylinder as mentioned above, the aforementioned configuration of the treatment unit with the inner and outer cylinders also applicable to this case. In this embodiment, the water entering from an inlet of the tank body firstly flows through the annular space between the tank body and the inner cylinder, thereby being crookedly guided by the guide plate so as to be treated. The treated water enters into the inner cylinder from a lower end opening of the inner cylinder, and then is discharged from the tank body under the guide of the inner cylinder. Alternatively, the water also can flow along a reverse direction.

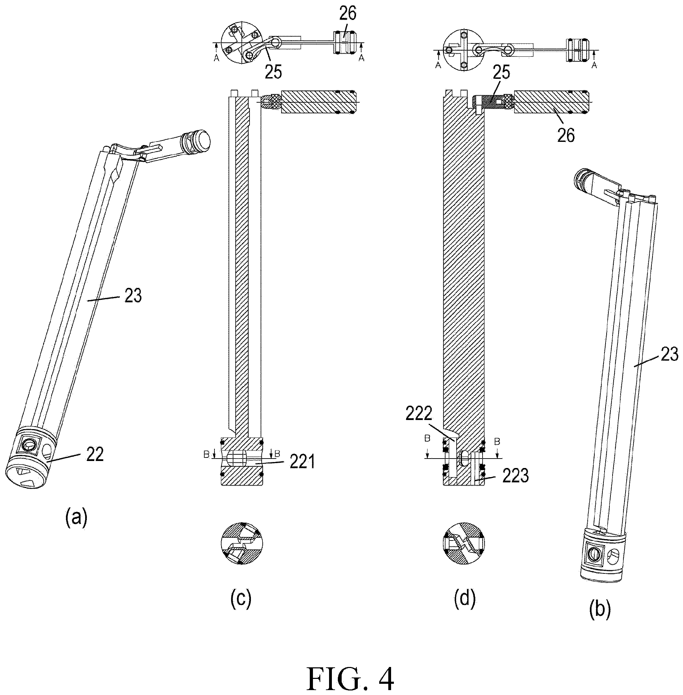

A manual switching mechanism is introduced in detail as follows with reference to FIGS. 2, 3 and 4. FIGS. 4(a) and 4(b) are perspective views of a valve core and a valve rod, and FIGS. 4(c) and 4(d) are sectional views of the valve core and the valve rod. A main object of setting the manual switching mechanism is to easily switch between at least two states, i.e., a normal treatment state and a backwash state. For this purpose, an additional housing 21 is provided at a side of the main housing 1 according to this invention, a valve chamber of a valve for switching is formed by the additional housing 21.

As shown in the drawing, the additional housing 21 has a diameter obviously smaller than that of the main housing 1, and a cylindrical space is formed within the additional housing 21. A lower portion of the space is the valve chamber where a cylindrical valve core 22 for switching is mounted. A passage 11 is formed between the main housing 1 and the additional housing 21 and within a height range of the valve core 22. The passage serves as a water intake passage 11 for supplying water to respective treatment units of the treatment device main body. Meanwhile, the passage also preferably serves as a backwash water discharge passage. An opening 17 is formed at a sidewall of the additional housing 21 and within a height range of the valve core, and the opening serves as an inlet for supplying the water (no matter it is the water to be treated or a water for backwash) for the whole treatment device. In the additional housing 21, a vertical backwash water intake passage 18 extending upwards is formed above the valve core. The vertical backwash water intake passage 18 is connected with the horizontal backwash water intake passage 14 as motioned above so as to together form a backwash water intake passage for introduction of the backwash water. A backwash discharge outlet 19 is formed at a lower portion of the valve core.

A valve rod 23 is connected with an upper end face of the cylindrical valve core 22 in an anti-twisting manner. The valve rod 23 extends upwards in the vertical backwash water intake passage 18, and an upper end of the valve rod 23 is connected with a knob 24 in an anti-twisting manner. A portion of the knob 24 is inserted into the additional housing 21. Sealing is maintained between this portion and the additional housing 21. The knob 24 can be manually operated by an operator from the outside. In this way, when the knob 24 is rotated by an operator, it will drive the valve rod 23 and valve core 22 to rotate so as to achieve switching between operational modes. As shown in FIG. 4, a connection rod 25 is rotatably connected with the valve rod 23 at a position of the upper end of the valve rod 23 deviating from the rotation axis, the other end of the connection rod 25 is rotatably connected with a sealed piston 26 (sliding sealing member) for separating the water discharge passage 12 from the backwash water intake passage. In the case of rotating the valve rod 23, the sealed piston 26 is driven by the connection rod 25 to be able to move in parallel in the water discharge passage 12 at the upper portion of the main housing 1 so as to be switchable between the position at which the water discharge passage 12 is opened and the position at which the water discharge passage 12 is closed. It can be seen by comparing FIG. 2 and FIG. 3 that when the sealed piston 26 is located between the backwash water inlet 15 and the water outlet 13, the water outlet 13 is open, so that the water in the device main body is capable of flowing out through the water discharge passage 12; however, when the sealed piston 26 is moved to a top of the water outlet 13 and blocks the water outlet 13, the water is impossible to enter into the water discharge passage 12. That is to say, the sealed piston 26 achieves the on-off control of the water discharge passage 12 by blocking or avoiding the water outlet 13.

A switching function of the valve core 22 is achieved by pores on the valve core being selectively connected with different passages when the valve core is located at different positions. As shown in FIG. 4, the valve core comprises a straight pore 221 along a radial direction of the cylinder, and the straight pore 221 is used to connect the inlet 17 and the water intake passage 11. In addition, the valve core 22 further comprises a first pore 222 leading to the upper end face as shown in the drawing from the cylindrical surface of the valve core 22, and a second pore 223 leading to another end face from the cylindrical surface of the valve core 22. The first pore 222 is used to allow the inlet 17 to be communicated with the backwash water intake passage (specifically, the vertical backwash water intake passage 18), and the second pore 223 is used to allow the backwash water discharge passage 16 to be communicated with the backwash discharge outlet 19. Obviously, the above straight pore 221, the first pore 222 and the second pore 223 are not communicated with each other. Moreover, in the case that the water intake passage 11 and the backwash water discharge passage 16 share the same passage, openings of the first pore 222 and the second pore 223 on the cylindrical surface of the valve core 22 are also preferably symmetrical in the radial direction of the valve core 22.

Actions of the manual switching mechanism are explained below with reference to FIGS. 2 and 3.

FIG. 2 illustrates that the water treatment unit is at a normal treatment state. Herein, the manual switching mechanism is at a treatment position. Specifically, the straight pore 221 of the valve core 22 is aligned with the inlet 17 and the water intake passage 11, and the sealed piston 26 opens the water discharge passage 12. As indicated by the arrow in FIG. 2, the water to be treated enters into the water intake passage 11 from the inlet along a thus-formed path through the straight pore 221 of the valve core 22, enters into the treatment device main body from the water intake passage 11, and is discharged though the water discharge passage 12 at the upper portion of the main housing 1 after being treated.

FIG. 3 illustrates that the water treatment unit is at a backwash state. Here, the manual switching mechanism is at a backwash position. Specifically, the first pore 222 of the valve core 22 is communicated with the inlet 17 and the backwash water intake passage (specifically, the vertical backwash water intake passage 18), and the second pore 223 is communicated with the backwash water discharge passage 16 and the backwash discharge outlet 19. The sealed piston 26 blocks the water discharge passage 12. As indicated by the arrow in FIG. 3, the backwash water enters into the passages 18 and 14 from the inlet along a thus-formed path through the first pore 222 of the valve core 22, enters into the treatment device main body from the backwash water inlet 15 at the upper portion of treatment device main body, and is discharged though the backwash water discharge passage 16 (also being the water intake passage 11) at the upper portion of the main housing 1 after completing the washing.

In this embodiment, the sealing piston 26 is preferably arranged, which is conducive to ensure correct flow of the water when the normal treatment and the backwash treatment is performed by means of a simple configuration. However, this configuration is not necessary. For example, a fixed sealing member can be provided between the water outlet 13 and the backwash water inlet 15 to separate them from each other. Moreover, in order to prevent discharge of the backwash water through the water outlet 13 and the water discharge passage 12 in backwash, a sealing plug can be provided at an end of the water discharge passage 12 leading to the outside of the device.

In this embodiment, it is preferable that the water intake passage and the water discharge passage share the same passage, thereby simplifying the structures of the valve core and the housing. However, different passages also can be used for them, which can be achieved by setting pores differently positioned from those as shown in the drawing on the valve core and the housing (a position between the main housing and the additional housing).

## Claims

1. A sealing structure comprising:
a cylinder (1) with an opening formed at one end thereof, the cylinder (1) comprising an inner wall surface and an outer wall surface, and an outer thread being provided on the outer wall surface;
a sealing cover (31) which is capable of hermetically cooperating with the inner wall surface of the cylinder (1) so as to seal the opening of said cylinder; and
a support cover (32) which is capable of being connected with the cylinder (1) by thread engagement with said outer thread of said cylinder;
wherein when the support cover (32) and the cylinder (1) are relatively rotated in order to achieve a threaded connection of the support cover (32) and the cylinder (1), the support cover (32) is capable of supporting the sealing cover (31) and impelling it to move in parallel along the inner wall of the cylinder so as to allow the sealing cover (31) to reach a position at which it seals the opening;
the support cover (32) has a support surface facing the opening, the sealing cover (31) has a supported surface facing away from the opening,
wherein the frictional coefficient between the support surface and supported surface is so low that the sealing cover (31) is not rotated relative to the cylinder (1), but is merely moved in parallel relative to the cylinder (1) when the support cover is rotated relative to the cylinder and the support surface supports and impels the supported surface,
wherein the support cover (32) and the sealing cover (31) comprise a connection structure to connect them together, by which the support cover (32) drives the sealing cover to move in parallel relative to the cylinder so as to leave the opening when the support cover (32) is detached by rotation from the cylinder (1),
wherein the connection structure comprises:
a through hole provided at a center of the support cover (32); and
an engagement member with a rod portion running through the through hole, one end of the rod portion being connected with the sealing cover (31), and the other end thereof being connected with a head;
wherein a size of the head is greater than that of the through hole so that the support cover is clamped between the head and the sealing cover, thereby preventing disengagement of the support cover (32) from the sealing cover (31),
wherein the supported surface consists of a flat portion and a cylindrical projection projecting axially from the supported surface of the sealing cover, said cylindrical projection being provided at a center of the sealing cover (31), and comprising an engagement hole, with which the one end of the rod portion is engaged so as to connect the one end of the rod portion with the sealing cover (31),
wherein the support surface consists of a flat portion, of the through hole and along the axis of said through hole of a cylindrical recess for accommodating said cylindrical projection of said supported surface, said cylindrical recess having a larger diameter than said through hole,
wherein the support surface supports the sealing cover (31) by matingly engaging its flat portion with the flat portion of the supported surface,
wherein a clearance cooperation is formed between the rod portion of the engagement member and the through hole of the support cover and between the cylindrical projection and the cylindrical recess so as to reduce frictional resistance,
wherein the engagement member closely engages with the sealing cover (31), so that there is no relative rotation between the engagement member and the sealing cover (31) during a process of detaching the support cover (32) by rotation from the cylinder (1), and
during the process of detaching the support cover (32) by rotation from the cylinder (1), the engagement member does not rotate, and the support cover (32) drives the engagement member to move in parallel relative to the cylinder and further drives the sealing cover (31) to move in parallel relative to the cylinder,
wherein a periphery of the sealing cover (31) is provided with a sealing ring (34) which hermetically abuts against the inner wall surface of the cylinder (1) when the opening is sealed by the sealing cover (31).

2. The sealing structure according to claim 1, wherein:
the rod portion is formed integrally with the sealing cover (31).

3. The sealing structure according to claim 1, wherein the rod portion is connected with the sealing cover (31) in a detachable manner.

4. The sealing structure according to claim 3, wherein the rod portion is connected with the sealing cover (31) through thread.

5. The sealing structure according to one of claims 1 to 4, wherein the rod portion is formed integrally with the head.

6. The sealing structure according to one of claims 1 to 4, wherein the rod portion is connected with the head in a detachable manner.

7. The sealing structure according to claim 6, wherein the rod portion is connected with the head through thread.

8. The sealing structure according to one of claims 1 to 7, wherein the rod portion is a cylindrical rod, and the through hole has a diameter greater than that of the rod portion.

## Patentansprüche

1. Dichtungsstruktur, umfassend:
einen Zylinder (1) mit einer an einem Ende davon gebildeten Öffnung, wobei der Zylinder (1) eine Innenwandfläche und eine Außenwandfläche umfasst und ein Außengewinde an der Außenwandfläche bereitgestellt ist;
einen Dichtungsdeckel (31), der in der Lage ist, hermetisch mit der Innenwandfläche des Zylinders (1) zusammenzuwirken, um die Öffnung des Zylinders abzudichten; und
einen Stützdeckel (32), der in der Lage ist, durch Gewindeeingriff mit dem Außengewinde des Zylinders mit dem Zylinder (1) verbunden zu werden;
wobei, wenn der Stützdeckel (32) und der Zylinder (1) in Bezug aufeinander gedreht werden, um eine Schraubverbindung des Stützdeckels (32) und des Zylinders (1) zu erreichen, der Stützdeckel (32) in der Lage ist, den Dichtungsdeckel (31) zu stützen und ihn vorwärts zu treiben, um sich parallel entlang der Innenwand des Zylinders zu bewegen, sodass dem Dichtungsdeckel (31) ermöglicht wird, eine Position zu erreichen kann, an der er die Öffnung abdichtet;
der Stützdeckel (32) eine der Öffnung zugewandte Stützfläche aufweist, der Dichtungsdeckel (31) eine von der Öffnung abgewandte gestützte Fläche aufweist,
wobei der Reibungskoeffizient zwischen der Stützfläche und der gestützten Fläche so niedrig ist, dass der Dichtungsdeckel (31) nicht in Bezug auf den Zylinder (1) gedreht wird, sondern lediglich parallel zu dem Zylinder (1) bewegt wird, wenn der Stützdeckel in Bezug auf den Zylinder gedreht wird und die Stützfläche die gestützte Fläche stützt und vorwärts antreibt,
wobei der Stützdeckel (32) und der Dichtungsdeckel (31) eine Verbindungsstruktur umfassen, um sie miteinander zu verbinden, durch die der Stützdeckel (32) den Dichtungsdeckel antreibt, um sich parallel zu dem Zylinder zu bewegen, um die Öffnung zu verlassen, wenn die Stützdeckel (32) durch Drehung von dem Zylinder (1) gelöst wird,
wobei die Verbindungsstruktur Folgendes umfasst:
ein Durchgangsloch, das in einer Mitte des Stützdeckels (32) bereitgestellt ist; und
ein Eingriffselement mit einem Stababschnitt, der durch das Durchgangsloch verläuft, wobei ein Ende des Stababschnitts mit dem Dichtungsdeckel (31) und das andere Ende davon mit einem Kopf verbunden ist;
wobei eine Größe des Kopfs größer ist als die des Durchgangslochs, sodass der Stützdeckel zwischen dem Kopf und dem Dichtungsdeckel eingespannt ist, wodurch ein Lösen des Stützdeckels (32) von dem Dichtungsdeckel (31) verhindert ist,
wobei die gestützte Fläche aus einem flachen Abschnitt und einem zylindrischen Vorsprung, der axial von der gestützten Fläche des Dichtungsdeckels hervorsteht, wobei der zylindrische Vorsprung in einer Mitte des Dichtungsdeckels (31) bereitgestellt ist und ein Eingriffsloch umfasst, mit dem das eine Ende des Stababschnitts in Eingriff steht, um das eine Ende des Stababschnitts mit dem Dichtungsdeckel (31) zu verbinden,
wobei die Stützfläche aus einem flachen Abschnitt, dem Durchgangsloch und entlang der Achse des Durchgangslochs aus einer zylindrischen Aussparung zum Aufnehmen des zylindrischen Vorsprungs der gestützten Fläche besteht, wobei die zylindrische Aussparung einen größeren Durchmesser als das Durchgangsloch aufweist,
wobei die Stützfläche den Dichtungsdeckel (31) stützt, indem sie seinen flachen Abschnitt mit dem flachen Abschnitt der gestützten Fläche passend eingreift,
wobei eine Spielkooperation zwischen dem Stababschnitt des Eingriffselements und dem Durchgangsloch des Stützdeckels, und zwischen dem zylindrischen Vorsprung und der zylindrischen Aussparung gebildet wird, um einen Reibungswiderstand zu verringern,
wobei das Eingriffselement eng mit dem Dichtungsdeckel (31) eingreift, sodass es während eines Lösevorgangs des Stützdeckels (32) durch Drehung von dem Zylinder (1) keine relative Drehung zwischen dem Eingriffselement und dem Dichtungsdeckel (31) gibt, und
während des Lösevorgangs des Stützdeckels (32) durch Drehung von dem Zylinder (1) das Eingriffselement nicht dreht, und der Stützdeckel (32) das Eingriffselement antreibt, sich parallel zu dem Zylinder zu bewegen, und ferner den Dichtungsdeckel (31) antreibt, um sich parallel zu dem Zylinder zu bewegen,
wobei ein Umfang des Dichtungsdeckels (31) mit einem Dichtungsring (34) versehen ist, der hermetisch an der Innenwandfläche des Zylinders (1) anliegt, wenn die Öffnung durch den Dichtungsdeckel (31) abgedichtet ist.

2. Dichtungsstruktur nach Anspruch 1, wobei:
der Stababschnitt einteilig mit dem Dichtungsdeckel (31) gebildet ist.

3. Dichtungsstruktur nach Anspruch 1, wobei der Stababschnitt auf eine lösbare Weise mit dem Dichtungsdeckel (31) verbunden ist.

4. Dichtungsstruktur nach Anspruch 3, wobei der Stababschnitt über ein Gewinde mit dem Dichtungsdeckel (31) über ein Gewinde verbunden ist.

5. Dichtungsstruktur nach einem der Ansprüche 1 bis 4, wobei der Stababschnitt einteilig mit dem Kopf gebildet ist.

6. Dichtungsstruktur nach einem der Ansprüche 1 bis 4, wobei der Stababschnitt auf eine lösbare Weise mit dem Kopf verbunden ist.

7. Dichtungsstruktur nach Anspruch 6, wobei der Stababschnitt über ein Gewinde mit dem Kopf verbunden ist.

8. Dichtungsstruktur nach einem der Ansprüche 1 bis 7, wobei der Stababschnitt ein zylindrischer Stab ist und das Durchgangsloch einen größeren Durchmesser als der des Stababschnitts aufweist.

## Revendications

1. Structure d'étanchéité comprenant :
un cylindre (1) avec une ouverture formée à l'une de ses extrémités, le cylindre (1) comprenant une surface de paroi intérieure et une surface de paroi extérieure, et un filetage extérieur étant prévu sur la surface de paroi extérieure ;
un couvercle d'étanchéité (31) qui est capable de coopérer de manière hermétique avec la surface de paroi interne du cylindre (1) de manière à sceller l'ouverture dudit cylindre ; et
un couvercle de support (32) qui peut être connecté au cylindre (1) par engagement de filetage avec ledit filetage extérieur dudit cylindre ;
dans lequel, lorsque le couvercle de support (32) et le cylindre (1) tournent relativement pour réaliser une liaison filetée du couvercle de support (32) et du cylindre (1), le couvercle de support (32) est capable de supporter le couvercle d'étanchéité (31) et en le poussant à se déplacer parallèlement le long de la paroi interne du cylindre de manière à permettre au couvercle d'étanchéité (31) d'atteindre une position dans laquelle il ferme l'ouverture de manière étanche ;
le couvercle de support (32) a une surface de support faisant face à l'ouverture, le couvercle d'étanchéité (31) a une surface de support opposée à l'ouverture,
dans lequel le coefficient de frottement entre la surface de support et la surface supportée étant si bas que le couvercle d'étanchéité (31) n'est pas entraîné en rotation par rapport au cylindre (1), mais simplement déplacé en parallèle par rapport au cylindre (1) lorsque le couvercle de support est en rotation par rapport au cylindre et que la surface de support soutient et presse la surface supportée,
dans lequel le couvercle de support (32) et le couvercle d'étanchéité (31) comprennent une structure de connexion permettant de les connecter ensemble, grâce à laquelle le couvercle de support (32) entraîne le couvercle d'étanchéité à se déplacer parallèlement par rapport au cylindre de manière à quitter l'ouverture lorsque le couvercle de support (32) est détaché par rotation du cylindre (1),
dans lequel la structure de liaison comprenant :
un trou traversant prévu au centre du couvercle de support (32) ; et
un élément d'engagement avec une partie de tige traversant le trou traversant, une extrémité de la partie de tige étant connectée au couvercle d'étanchéité (31) et son autre extrémité étant connectée à une tête ;
dans lequel la taille de la tête est supérieure à celle du trou traversant de sorte que le couvercle de support soit serré entre la tête et le couvercle d'étanchéité, empêchant ainsi le dégagement du couvercle de support (32) du couvercle d'étanchéité (31),
dans lequel la surface consiste en une partie plate et une saillie cylindrique faisant saillie axialement de la surface supportée du couvercle d'étanchéité, ladite saillie cylindrique étant prévue au centre du couvercle d'étanchéité (31) et comprenant un trou d'engagement avec lequel l'extrémité de la partie tige est engagée de manière à relier l'une des extrémités de la partie tige au couvercle d'étanchéité (31),
dans lequel la surface de support étant constituée d'une partie plate, du trou traversant et le long de l'axe dudit trou traversant d'un évidement cylindrique pour loger ladite saillie cylindrique de ladite surface supportée, ledit évidement cylindrique ayant un diamètre plus grand que ledit trou traversant,
dans lequel la surface de support supporte le couvercle d'étanchéité (31) par engagement réciproque de sa partie plate avec la partie plate de la surface supportée,
dans lequel une coopération de dégagement est formée entre la partie tige de l'élément d'engagement et le trou traversant du couvercle de support et entre la saillie cylindrique et
l'évidement cylindrique de manière à réduire la résistance au frottement,
dans lequel l'élément d'engagement coopère étroitement avec le couvercle d'étanchéité (31),
de sorte qu'il n'y a pas de rotation relative entre l'élément d'engagement et le couvercle d'étanchéité (31) pendant le processus de détachement du couvercle de support (32) par rotation du cylindre (1), et
pendant le processus de détachement du couvercle de support (32) par rotation du cylindre (1), l'élément d'engagement ne tourne pas, et le couvercle de support (32) entraîne le déplacement parallèle de l'élément d'engagement par rapport au cylindre et entraîne en outre le couvercle d'étanchéité (31) à se déplacer en parallèle par rapport au cylindre,
dans lequel une périphérie du couvercle d'étanchéité (31) étant pourvue d'un anneau d'étanchéité (34) qui bute hermétiquement contre la surface de paroi intérieure du cylindre (1) lorsque l'ouverture est fermée de manière étanche par le couvercle d'étanchéité (31).

2. Structure d'étanchéité selon la revendication 1, dans laquelle : la partie tige est formée d'un seul tenant avec le couvercle d'étanchéité (31).

3. Structure d'étanchéité selon la revendication 1, dans laquelle la partie tige est connectée au couvercle d'étanchéité (31) de manière détachable.

4. Structure d'étanchéité selon la revendication 3, dans laquelle la partie tige est reliée au couvercle d'étanchéité (31) par un filetage.

5. Structure d'étanchéité selon l'une des revendications 1 à 4, dans laquelle la partie tige est formée d'un seul tenant avec la tête.

6. Structure d'étanchéité selon l'une des revendications 1 à 4, dans laquelle la partie tige est reliée à la tête de manière amovible.

7. Structure d'étanchéité selon la revendication 6, dans laquelle la partie tige est reliée à la tête par un filetage.

8. Structure d'étanchéité selon l'une des revendications 1 à 7, dans laquelle la partie tige est une tige cylindrique et le trou traversant a un diamètre supérieur à celui de la partie tige.
